Europäisches Patentamt

(19) European Patent Office

Office européen des brevets

(11) Publication number: **0 301 822 B1**

## (12) EUROPEAN PATENT SPECIFICATION

(45) Date of publication of patent specification:
06.03.91 Bulletin 91/10

(51) Int. Cl.⁵: **B60S 1/40**

(21) Application number: **88306906.4**

(22) Date of filing: **27.07.88**

(54) Pivot joint.

(30) Priority: **28.07.87 GB 8717834**

(43) Date of publication of application:
**01.02.89 Bulletin 89/05**

(45) Publication of the grant of the patent:
**06.03.91 Bulletin 91/10**

(84) Designated Contracting States:
**BE DE ES FR IT**

(56) References cited:
**FR-A- 2 449 564**

(73) Proprietor: **TRICO-FOLBERTH LIMITED**
**Great West Road**
**Brentford Middlesex TW8 9HP (GB)**

(72) Inventor: **Frimley, Charles Henry**
**25, Redford Road**
**Windsor Berkshire (GB)**

(74) Representative: **Pedder, James Cuthbert**
**J.C. Pedder & Co. 38 Norbury Cross**
**Norbury London SW16 4JQ (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a pivot joint and more particularly to a connector for pivotally connecting a windscreen wiper arm to a windscreen wiper blade.

There are many different types of termination for windscreen wiper arms and this makes it difficult for manufacturers of blades which are to be used as replacements for the blades of existing wiper installations to operate economically as they have to be able to supply replacement blades for all the various types of arm termination which are currently supplied on vehicles as original equipment. Most manufacturers make a range of different blades, usually varying on the basis of length and then supply adaptors or connectors which will enable one type of blade to be connected to a number of arm terminations.

One such arm termination is known a "Terel" termination and comprises a plastics moulding fixed permanently on to a straight arm piece, the plastics moulding having a forward facing keyhole slot which is intended to cooperate with a specially shaped pin provided across an aperture in the main yoke of a windscreen wiper blade. The pin has a pair of flats on it which reduce the diameter of the pin such that it can enter the stem portion of the keyhole slot. The main diameter of the pin is slightly less than the main internal diameter of the keyhole slot so that, when the pin enters the larger diameter part of the keyhole slot, it can be rotated to prevent the pin from reentering the stem portion and so lock the pin longitudinally in the end termination. If the pin is locked against rotation relative to the blade, the arrangement is such that the blade is attachable and detachable when the blade is rotated out of its working position but is locked over its working range. Sideways removal of the pin from the end termination is prevented over the working range by the sides of the aperture across which the pin passes.

However, two problems occur in meeting the replacement market. Firstly, it is undesirable to have to supply loose pins of different shapes and there is a serious difficulty in ensuring attachment of the pin so that its flats remain at the right angular position. In any event, it is difficult to ensure a correct working relationship between arm and blade. Secondly, this type of attachment is particularly difficult, if not impossible to use with arms which have no "lock back" and thus cannot be moved sufficiently far from the windscreen to permit suitable pivoting of the blade.

The present invention seeks to provide a pivot joint in the form of a connector by means of which an arm termination with a forward facing keyhole slot can be connected to a standard type of blade.

According to the invention, there is provided a pivot joint comprising a connector for connecting a windscreen wiper arm with an end termination having a forwardly facing keyhole slot to a windscreen wiper blade having a harness with an attachment aperture in the main yoke thereof, characterized in that the connector comprises a first part including attachment means for attaching the connector pivotally in the attachment aperture of the blade and a second part including an elongate tongue with an enlarged portion at its free end, the tongue being adapted to sit within the stem of the keyhole slot of the arm termination while the enlarged end portion of the tongue is adapted to sit in the enlarged diameter part of the keyhole slot.

Preferably, the attachment means comprise an upper part with a pair of outwardly extending shoulders and two depending resilient legs which can pass through the blade attachment aperture, the free end of each leg having an outwardly extending detent, the arrangement being such that the sides of the blade attachment aperture are located with play between the shoulders of the connector and the detents.

The invention will now be described in greater detail by way of example with reference to the drawings, in which :

Figure 1 is a perspective view from above of one form of connector in accordance with the invention ;

Figure 2 is a perspective view from below of the connector of figure 1 ;

Figure 3 is a perspective view of an arm to blade connection using the connector of figures 1 and 2, and

Figure 4 is a side view corresponding to figure 3 but with one side of the main yoke of the windscreen wiper blade removed.

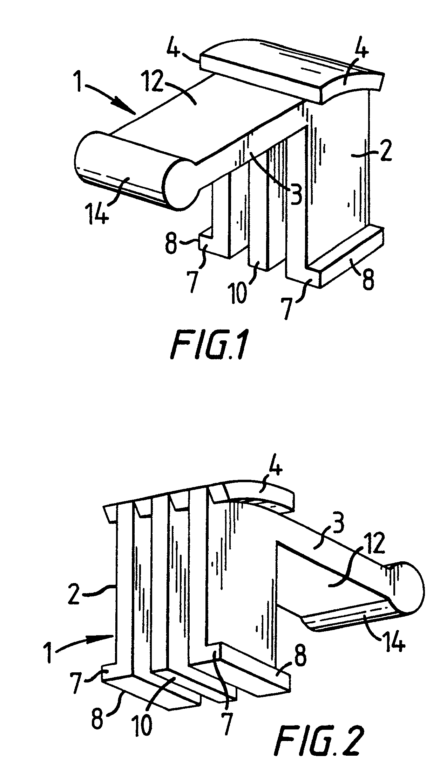

Referring firstly to figures 1 and 2, one form of connector 1 comprises two parts 2 and 3. The first part 2 comprises an attachment means including a pair of laterally extending curved shoulder portions 4 and two depending resilient legs 7. The free ends of the legs terminate in detents 8 which extend laterally outwards from the connector. Between the two legs 7 is a third depending member 10 which acts as a stop as will be explained hereafter.

The second part 3 of the connector 1 comprises a substantially rigid tongue 12 extending longitudinally of the connector 1 and at right angles to the legs 7. The free end of this tongue 12 is formed by a cylindrical member 14 of a diameter which is larger than the thickness of the tongue.

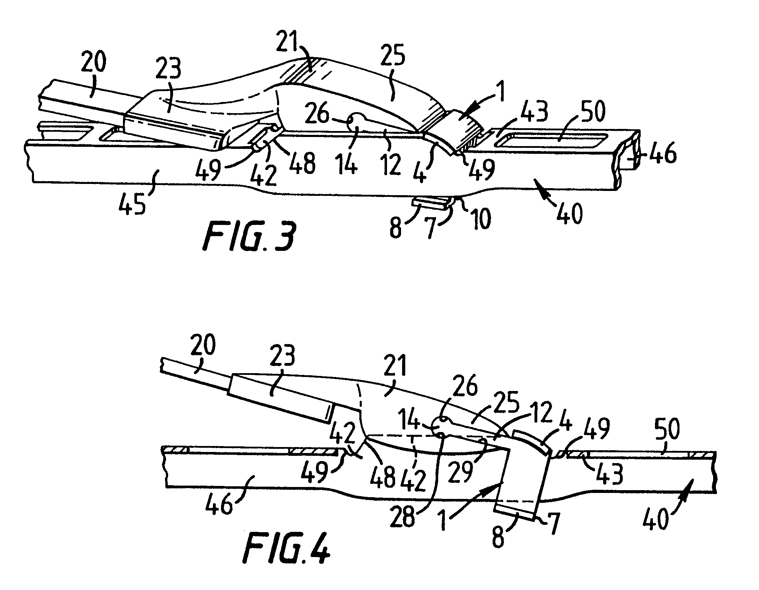

The above described connector 1 is intended to provide a pivotal connection between a windscreen wiper arm having a termination with a forwardly facing keyhole slot (commonly known as a "Terel" termination) and a standard type of windscreen wiper blade having a harness including a main yoke of substantially channel section with an aperture in the base of the channel for attachment purposes. Such an arrangement is shown in figures 3 and 4.

In these figures, there is shown a windscreen wiper arm 20 having an end termination 21 in the form of a plastics moulding. This moulding has a socket 23 for receiving the end of the arm 20 and an attachment portion 25 exhibiting a forwardly facing keyhole slot 26 of which the circular section part is shown at 28 while the stem portion is shown at 29. It will be appreciated that in the form of termination shown, the arm 20 is arranged offset from the attachment portion 25.

A part of the main yoke 40 of a windscreen wiper blade is also shown. As can be seen, the main yoke 40 is of channel section with an attachment aperture 42 in the base 43 of the channel. The side walls 45 and 46 of the yoke 40 are of increased depth in the region of the aperture 42 and the upper edges of the sides 45 and 46 at the aperture 42 merge into the adjacent parts of the yoke 40 by means of a curved part 48 and an indentation 49. Slots 50 are shown in the main yoke 40 to provide improved performance but form no part of the present invention.

As can be seen, the arm termination 21 is connected to the main yoke 40 by means of a connector 1 as shown in figures 1 and 2. To this end the connector 1 is seated in the aperture 42 of the main yoke 40. In this position, the curved shoulders 4 sit about the curved part 48 of the edge of the aperture 42 and the detents 8 on the ends of the legs 7 protrude under the sidewalls 45 and 46. Thus the side walls are effectively retained, with play, between the shoulders 4 and detents 8. The tongue 12 and cylindrical end part 14 are used for the attachment of the arm termination 21. Thus the cylindrical part 14 sits in the enlarged end 28 of the keyhole slot 26 and the tongue 12 sits in the stem portion 29 thereof.

It will be appreciated that, unlike in normal "Terel" connections, pivotal movement between arm and blade does not take place about the axis of the slot portion 28 but takes place by virtue of the pivotal play available at the connector which is assisted by the cooperating curved surfaces 4 and 48.

Assembly and disassembly of the windscreen wiper will now be considered :

In order to connect the arm and blade, the connector is first placed on the arm. To do this, the tongue 12 is merely slid sideways into the keyhole slot 26 of the arm termination 21. Then the blade 40 is assembled to the arm 20. To achieve this, the legs 7 are pinched together to reduce the width of the connector 1 and, while the legs 7 are maintained in this position, the connector is inserted into the aperture 42 in the main yoke 40 adjacent to the end thereof. The legs 7 are then released and the connector is pushed home in the aperture. If the connector is located in the correct position, the legs 7 will snap back out again, imprisoning the sides 45 and 46 of the yoke 40 between the shoulders 4 and the detents 8. Should the connector not be in the required position, it can be pushed up against the end of the blade aperture 42, whereupon the legs 7 will snap out again. It will be observed that, when pinching the legs 7 together, they will engage the member 10 which will act as a stop and prevent over stressing of the legs 7.

The blade can be detached from the arm by a reverse operation. Thus, the legs 7 are again pinched together and the connector 1 is pushed up out of the aperture 42 in the main yoke. Once the connector is clear of the blade, it can be readily removed from the arm termination 21 by sliding the tongue 12 sideways out of the keyhole slot 26.

It will be appreciated that it is possible to assemble the connector 1 firstly to the blade yoke 40 and thereafter to push the end termination 21 longitudinally on to the tongue 12, the cylindrical end 14 of the tongue snapping into the circular section part 28 of the keyhole slot 26. Likewise the arm termination 21 can be pulled off the tongue 12 for dissassembly. However, this latter method is not to be recommended as it can overstress the arm termination 21 and necessitate the replacement of the arm as well.

It is to be understood that modifications and/or additions may be made to the above described embodiment without departing from the scope of the invention. For example, the middle depending member 10 of the connector 1 could be omitted if the stop action is not required. The method of attachement of the connector 1 to the blade could be varied. Thus, for example, the connector 1 could be clipped onto the pin normally provided extending across the aperture 42 in the main yoke 40. The curved shoulder 4 could be replaced by a straight shoulder which could be angled relative to the associated detent 8.

## Claims

1. A connector for connecting a windscreen wiper arm (20) with an end termination (21) having a forwardly facing keyhole slot (26) to a windscreen wiper blade having a harness with an attachment aperture (42) in the main yoke (40) thereof, characterised in that the connector (1) comprises a first part (2) including attachment means (4, 7, 8) for attaching the connector (1) pivotally in the attachment aperture (42) of the blade and a second part (3) including an elongate tongue (12) with an enlarged portion (14) at its free end, the tongue (12) being adapted to sit within the stem (29) of the keyhole slot (28) of the arm termination (21) while the enlarged end portion (14) of the tongue (12) is adapted to sit in the enlarged diameter part (28) of the keyhole slot (26).

2. A connector as claimed in claim 1, wherein the attachment means (4, 7, 8) comprise an upper part (2) with a pair of outwardly extending shoulders (4) and two depending resilient legs (7) which can pass through the blade attachment aperture (42), the free end of each leg (7) having an outwardly extending detent (8), the arrangement being such that the sides of the blade attachment aperture (42) are located with play between the shoulders (4) of the connector (1) and the detents (8).

3. A connector as claimed in claim 2, wherein a third leg (10) is provided located between the other two legs (7) to act as a stop and prevent over stressing of the said other two legs (7) when they are pressed towards each other for assembly purposes.

## Ansprüche

1. Verbindungsteil zur Verbindung des Scheibenwischerarmes (20) mit einem Ende (21) mit einem nach vorn zeigenden schlüssellochförmigen Schlitz (26) an das Scheibenwischerblatt mit einer Ausrüstung mit einer Befestigungsöffnung (42) in seinem Hauptbügel (40), dadurch gekennzeichnet, daß das Verbindungsteil (1) ein erstes Teil (2), das eine Befestigungseinrichtung (4, 7, 8) zur drehbaren Befestigung des Verbindungsteils (1) in der Befestigungsöffnung (42) des Blattes umfaßt, und ein zweites Teil (3) umfaßt, das eine verlängerte Zunge (12) mit einem vergrößerten Abschnitt (14) an ihrem freien Ende umfaßt, wobei diese Zunge (12) so angepaßt ist, daß sie in der Vertiefung (29) des schlüssellochförmigen Schlitzes (26) des Armendes (21) sitzt, wobei der vergrößerte Endabschnitt (14) der Zunge (12) so angepaßt ist, daß er in dem Teil (28) des schlüssellochförmigen Schlitzes (26) mit größerem Durchmesser sitzt.

2. Verbindungsteil nach Anspruch 1, worin die Befestigungseinrichtung (4, 7, 8) ein oberes Teil (2) mit einem paar sich nach außen erstreckenden Ansätzen (4) und zwei davon abhängigen elastischen Schenkeln (7) umfaßt, die durch die Befestigungsöffnung (42) des Blattes hindurchgeben können, wobei das freie Ende jedes Schenkels (7) einen sich nach außen erstreckenden Anschlag (8) aufweist, wobei diese Anordnung so ist, daß die Seiten der Befestigungsöffnung (42) des Blattes im Spielraum zwischen den Ansätzen (4) des Verbindungsteils (1) und den Anschlägen (8) angeordnet sind.

3. Verbindungsteil nach Anspruch 2, worin ein dritter Schenkel (10) vorgesehen ist, der zwischen den beiden anderen Schenkeln (7) vorgesehen ist, und zum Anhalten und zur Verhinderung der Überdehnung der anderen beiden Schenkel (7) dient, wenn sie zum Zusammenbau gegeneinander gedrückt werden.

## Revendications

1. Connecteur destiné à relier un bras d'essuie-glace pour pare-brise (20) muni d'une extrémité (21) comportant une fente (26) en forme de trou de serrure et faisant face vers l'avant sur une lame d'essuie-glace comportant un harnais muni d'une ouverture de fixation (42) dans l'étrier principal (40) de celui-ci, caractérisé en ce que le connecteur (1) est constitué d'une première partie (2) comportant des moyens de fixation (4, 7, 8) pour le fixer de façon pivotante dans l'ouverture de fixation (42) de la lame, et d'une seconde partie (3) comprenant une languette allongée (12) munie d'une portion agrandie (14) sur son extrémité libre, la languette (12) étant apte à se loger à l'intérieur de la tige (29) de la fente en forme de trou de serrure (26) de l'extrémité du bras (21) tandis que la portion d'extrémité agrandie (14) de la languette (12) est apte à se loger dans la partie de diamètre agrandi (28) de ladite fente.

2. Connecteur selon la revendication 1, dans lequel les moyens de fixation (4, 7, 8) comprennent une partie supérieure (2) avec une paire d'épaulements s'étendant vers l'extérieur (4) et deux pattes élastiques dépendantes (7) qui peuvent traverser l'ouverture de fixation de lame (42), l'extrémité libre de chaque patte (7) présentant une protubérance s'étendant vers l'extérieur (8), l'agencement étant tel que les côtés de l'ouverture de fixation de lame (42) sont positionnés avec un certain jeu entre les épaulements (4) du connecteur (1) et les protubérances (8).

3. Connecteur selon la revendication 2, dans lequel une troisième patte (10) est prévue, entre les deux autres pattes (7), pour servir de butée et empêcher une sollicitation excessive des deux autres pattes (7) lorsqu'elles sont pressées l'une contre l'autre pour l'assemblage.

FIG.1

FIG.2

FIG.3

FIG.4

EP 0 301 822 B1